# EUROPÄISCHE PATENTSCHRIFT

(11) **EP 2 627 472 B1**
(45) Veröffentlichungstag und Bekanntmachung des Hinweises auf die Patenterteilung: **26.11.2014**
(21) Anmeldenummer: 11770405.6
(22) Anmeldetag: 07.10.2011
(51) Int. Cl.: B23K 31/02, F22B 9/06, F22B 37/10, F28F 1/40, B23K 37/02

(54) **VERFAHREN ZUR STEUERUNG EINER PUNKTSCHWEISSANLAGE MIT ERMITTELUNG DER POSITION EINES EINBAUKÖRPERS IN EINEM HOHLKÖRPER ; ZUGEHÖRIGE PUNKTSCHWEISSANLAGE**
METHOD FOR CONTROLLING A SPOT WELDING SYSTEM, INCLUDING THE DETERMINATION OF THE POSITION OF AN INSERTED ELEMENT IN A HOLLOW MEMBER; ASSOCIATED SPOT WELDING SYSTEM
PROCÉDÉ DE COMMANDE D'UN DISPOSITIF DE SOUDAGE PAR POINTS AVEC DÉTERMINATION DE LA POSITION D'UN CORPS ENCASTRÉ DANS UN CORPS CREUX ET DISPOSITIF DE SOUDAGE PAR POINTS CORRESPONDANT

(30) Priorität: 14.10.2010 DE 102010042457
(43) Veröffentlichungstag der Anmeldung: 21.08.2013
(73) Patentinhaber: Siemens Aktiengesellschaft, 80333 München (DE)
(72) Erfinder: BRÜCKNER, Jan, 91080 Uttenreuth (DE); EFFERT, Martin, 91058 Erlangen (DE); FRANKE, Joachim, 90403 Nürnberg (DE)
(86) Internationale Anmeldenummer: PCT/EP2011/067560
(87) Internationale Veröffentlichungsnummer: WO 2012/049088

(56) Entgegenhaltungen:
- EP-A1- 1 793 164
- FR-A1- 2 724 453
- JP-A- 7 060 459
- JP-A- 2001 170 785
- US-A- 3 272 961

## Beschreibung

Die Erfindung betrifft ein Verfahren zur Steuerung einer Punktschweißanlage zur Fixierung eines Einbaukörpers in einem Hohlkörper und eine Punktschweißanlage zur Durchführung des genannten Verfahrens gemäß dem Oberbegriff der Ansprüche 1 und 11 (siehe, z.B., EP 1 793 164 A).

In einem Dampferzeuger wird die Oxidationswärme eines Brennstoffes auf ein Wärmeträgermedium übertragen. Die Übertragung erfolgt über Verdampferheizflächen, insbesondere über Rohre, durch die das Wärmeträgermedium geleitet wird und die - zumeist blockweise gruppiert - durch einen Brennraum oder um ihn herum geführt sind. In der Regel werden Glattrohre oder innenberippte Rohre eingesetzt. Die zur Drallerzeugung oder zur Drallunterstützung beim Strömungsmedium vorgesehenen Rippen von innenberippten Rohren, die in der Regel nach Art einer Helix oder eines Schraubengewindes verlaufen, können aus verschiedenen Gründen notwendig sein. Zu solchen zählen insbesondere eine niedrige Volllastmassenstromdichte des Verdampfers, eine hohe Wärmestromdichte und die dadurch bedingte Gefahr eines Filmsiedens, oder die Vermeidung einer Strömungsschichtung, welche sich an glatten Oberflächen leichter ausbilden kann als an rauen oder strukturierten Oberflächen.

Rohre mit Innenberippung werden üblicherweise aus einem Stück durch einen Kaltziehprozess hergestellt. Für einen solchen Kaltziehprozess existieren jedoch Einschränkungen in Bezug auf die Zusammensetzung des verwendeten Rohmaterials. So stellt beispielsweise für Stahllegierungen ein Chromgehalt von 5 % eine obere Schranke für die Herstellung eines Rohres mittels eines Kaltziehprozesses dar, da durch höhere Chromgehalte die Verformbarkeit der Stahllegierung zu stark eingeschränkt ist.

Andererseits können für bestimmte Betriebsparameter eines Verdampfungsprozesses spezifische Materialeigenschaften erforderlich oder vorteilhaft sein, die sich mit den für den Kaltziehprozess zulässigen Materialzusammensetzungen nicht realisieren lassen. So sind beispielsweise bei besonders hohen Wärmestromdichten und/oder besonders hohen Temperaturen des Wärmeträgermediums auf Grund der daraus resultierenden hohen Rohrwandtemperaturen legierte Stähle mit Chromgehalten jenseits von 5 % erforderlich.

Für solche Anwendungen können daher kaltgezogene innenberippte Rohre durch mit entsprechenden Einbaukörpern versehene Glattrohre substituiert werden. Eine Klasse derartiger Einbaukörper ist beispielsweise durch helixartig gewundene Drähte oder Drahtgeflechte gegeben, welche mit Hilfe einer Schablonenwelle hergestellt und in ein Glattrohr eingefügt werden, und welche durch ihre Torsionsspannung kontaktschlüssig an der Innenfläche des Glattrohres anliegen. Um Verschiebungen und Kriechbewegungen zu vermeiden, ist es erforderlich, solche Einbaukörper an ausgewählten Stellen an das Glattrohr innenseitig zu fixieren. Dies geschieht in der Regel durch punktuelles Schweißen. Da das Rohr einen Hohlkörper darstellt, und die Schweißstelle auf der Innenseite des Rohres liegen, und somit nur schwer einsehbar sind, ist für das Punktschweißen ein geeignetes Steuerungsverfahren erforderlich.

Der Erfindung liegt somit die erste Aufgabe zugrunde, ein Verfahren zur Steuerung einer Punktschweißanlage anzugeben, welches möglichst einfach und zuverlässig und mithin möglichst kostengünstig ist. Der Erfindung liegt ferner die zweite Aufgabe zugrunde, eine Punktschweißanlage zur Anwendung eines derartigen Verfahrens anzugeben.

Die erste Aufgabe der Erfindung wird durch die Merkmale des Anspruches 1 gelöst. Danach ist ein Verfahren zur Steuerung einer Punktschweißanlage zur Fixierung eines Einbaukörpers in einem Hohlkörper vorgesehen, wobei die Position des Einbaukörpers in dem Hohlkörper ermittelt wird, aus der Position des Einbaukörpers in dem Hohlkörper die Position eines Fixierpunktes ermittelt wird, und an dem Fixierpunkt eine punktuelle Verschweißung durchgeführt wird.

Die Erfindung geht von der Überlegung aus, dass aus der Position des Einbaukörpers in dem Hohlkörper und aus der a priori bekannten Form des Einbaukörpers die geometrische Konfiguration aus Hohlkörper und Einbaukörper ermittelt werden kann, aus der wiederum eine Anzahl geeigneter Fixierpunkte bestimmt werden kann.

Für eine besonders einfache und kostengünstige Ausführung des Verfahrens wird die Position des Einbaukörpers in dem Hohlkörper mittels eines Kontaktschlusses zwischen einem Kontaktelement der Punktschweißanlage und dem Einbaukörper ermittelt. Somit ist es insbesondere nicht erforderlich, die Lage des Einbaukörpers berührungsfrei zu erfassen. Für eine berührungsfreie Lageerfassung ausgebildete Sensoren sind in der Regel nämlich so empfindlich, dass sie vor jedem einzelnen Schweißvorgang in einen Mindestabstand zum Ort des Schweißvorganges zu bringen sind, um nicht durch Hitze oder Dämpfe beeinträchtigt und/oder beschädigt zu werden. Sowohl eine berührungsfreie sensorielle Erfassung an sich als auch Verfahrwege von Sensor- oder Werkzeugeinheiten sind insbesondere in beengten räumlichen Bereichen, wie innerhalb oder in der unmittelbaren Umgebung des Innenbereiches eines Hohlkörpers, beispielsweise eines Rohres, steuerungstechnisch aufwendig und somit zu vermeiden.

Vorteilhafterweise werden die Positionen einer Anzahl von Innenflächenpunkten des Hohlkörpers bezüglich der Lage des Hohlkörpers mittels eines Kontaktschlusses zwischen einem Kontaktelement der Punktschweißanlage und der Innenfläche des Hohlkörpers ermittelt. Auf diese Weise wird die Innenflächen-form des Hohlkörpers bereichsweise nach Art einer Abtastung erfasst.

Zweckdienlicherweise wird zur Bildung eines Kontaktschlusses zwischen dem Kontaktelement und der Innenfläche des Hohlkörpers die Position des Kontaktelementes bezüglich der Lage des Hohlkörpers variiert. Auf diese Weise werden die Flächenpunkte der Innenfläche des Hohlkörpers ertastet und deren Positionen registriert. Für Rohre und rohrförmige Hohlkörper mit einer definierten Symmetrieachse ist insbesondere eine Positionsvariation nach Zylinderkoordinaten vorteilhaft: So kann beispielsweise zur Bestimmung der Innenfläche eines Rohres an vorgegebenen Punkten der Längsachse das Kontaktelement entlang der radialen Richtung bezüglich der Achse von innen nach außen geführt werden, bis ein Kontakt zur Innenfläche erreicht ist.

In einem weitergehenden Verfahrensschritt hält das Kontaktelement vorzugsweise einen Mindestabstand zur Innenfläche des Hohlkörpers ein. Dies ist insbesondere dadurch erreicht, dass in einem Bereich, in dem die Positionen einer Anzahl von Flächenpunkten der Innenfläche des Hohlkörpers erfasst werden, das Kontaktelement lokal entlang der Flächennormale um einen vorgegebenen Abstand, insbesondere etwa um den halben Durchmesser des Einbaukörpers, von der Fläche entfernt wird. Bei einem Rohr kann beispielsweise zur Einhaltung eines solchen Mindestabstandes das Kontaktelement um einen Teil des Radius zur Mittelachse des Rohres hin zurückgeführt werden.

Weiterhin wird zweckmäßigerweise in einem weiteren Verfahrensschritt die Position des Kontaktelementes zur Ausbildung eines Kontaktschlusses mit dem Einbaukörper variiert. Die Variation der Position erfolgt dabei unter der Randbedingung, dass - zumindest in einem beschränkten Raumbereich - ein Mindestabstand des Kontaktelementes zur Innenfläche des Hohlkörpers eingehalten ist. Auf diese Weise wird in dem jeweiligen Bereich die Lage des Einbaukörpers ertastet, ohne dass sich dabei ein Kontaktschluss mit der Innenfläche des Hohlkörpers ereignet. So kann beispielsweise in einem Rohr, in welchem das Kontaktelement bereits um einen Teil des Rohrradius zur Mittelachse des Rohres hin zurückverschoben ist, die Position des Kontaktelementes in konstantem Abstand und parallel zur Mittelachse variiert werden, bis ein Kontaktschluss erreicht ist, welcher dann dem Einbaukörper zuzuordnen ist.

Liegt der Einbaukörper beispielsweise als Draht in einem Glattrohr vor, so kann das Kontaktelement nach Ertastung der Innenwand des Glattrohres um etwa die Hälfte des Drahtdurchmessers von der Innenwand in Richtung der Mittelachse des Glattrohres zurückgezogen sein. In diesem Abstand von der Innenwand ist die Detektionswahrscheinlichkeit für den Draht maximiert.

Ferner wird in einem weiteren Verfahrensschritt aus einem Kontaktschluss zwischen dem Kontaktelement und dem Einbaukörper und der Position des Kontaktelementes bezüglich der Lage des Hohlkörpers die Position des Einbaukörpers in dem Hohlkörper ermittelt. Hierzu ist insbesondere die Form des Einbaukörpers in einer Speichereinheit vorgehalten und abrufbar. Für den Fall, dass die Form des Einbaukörpers nicht bekannt und abgespeichert ist, kann die Lage des Einbaukörpers durch Kontaktschluss an einer Mehrzahl von Stützstellen erfasst werden. Aus der Position dieser Stützstellen kann bei entsprechendem Bedarf die Lage des Einbaukörpers in dem Hohlkörper bestimmt werden.

Gemäß der Erfindung wird zweckdienlicherweise als Kontaktelement ein Schweißdraht verwendet, und wird der Kontaktschluss zwischen dem Kontaktelement und dem Hohlkörper und/oder dem Einbaukörper durch Bildung eines elektrischen Kontaktschlusses detektiert. Der Schweißdraht erfüllt somit über das Punktschweißen hinausgehend eine Zusatzfunktion, so dass im Zuge des Verfahrens kein zusätzliches Bauteil als Kontaktelement eingesetzt werden muss. Das Verfahren wird dadurch besonders einfach, zügig und effizient, da insbesondere bei beschränkten räumlichen Verhältnissen die Anzahl mechanischer Bewegungen und Verfahrwege minimiert ist. Des Weiteren ist die Bildung eines elektrischen Kontaktschlusses ein besonders effektives Mittel, um einen mechanischen Kontaktschluss zwischen elektrisch leitfähigen Materialien, wie sie bei metallischen Dampferzeugerrohren und entsprechenden Drahteinbaukörpern typischerweise vorliegen, zu erfassen. Hierzu wird gemäß der Erfindung eine geeignet hohe Messspannung zwischen den Leitern angelegt, die insbesondere nicht zu hoch ist, so dass ein Funkenüberschlag in den Fällen, in denen kein mechanischer Kontaktschluss vorliegt, vermieden wird.

Die letztgenannte Ausgestaltungsvariante des Verfahrens ist vorzugsweise derart weitergebildet, dass an dem Schweißdraht eine Messspannung angelegt wird, die bei der Bildung eines elektrischen Kontaktes kurzgeschlossen ist. Das Kurzschlusssignal wird steuerungsseitig erfasst.

In einer weiteren zweckmäßigen Ausgestaltung des Verfahrens wird in Abhängigkeit von der Position des Einbaukörpers in dem Hohlkörper die Position eines Fixierpunktes auf der Innenfläche des Hohlkörpers ermittelt. Insbesondere wird dabei die Gesamtkonfiguration aus dem Hohlkörper und dem Einbaukörper unter Einbeziehung von dessen Querschnittsform berücksichtigt.

Vorzugsweise wird im Zuge eines weiteren Verfahrensschrittes der Schweißdraht mit einem definierten Abstand zur Innenfläche des Hohlkörpers an die Position des Fixierpunktes geführt. Liegt - wie in dem bereits gewählten Beispiel - der Einbaukörper als Draht in einem Glattrohr vor, so wird zweckdienlicherweise der Schweißdraht so zu der Innenwand geführt, dass der Schweißdraht endseitig in dem Bereich anlegt, in dem der Draht des Einbaukörpers die Rohrinnenwand berührt.

Eine punktuelle Verschweißung kann darauf folgend durchgeführt werden. Bedarfsweise kann eine Anzahl von Parametern vorgegeben sein, die Art und Umfang der Verschweißung bestimmen und/oder den Schweißprozess regeln.

Falls es sich als notwendig erweist, kann eine Anzahl der oben dargelegten Verfahrensschritte wiederholt durchgeführt werden und/oder in geänderter Reihenfolge durchgeführt werden, insbesondere im Zuge eines iterativen Prozesses. Ein solcher Prozess kann steuerungsseitig durch eine Anzahl vorgegebener Parameter bestimmt sein, beispielsweise durch die Vorgabe einer festen Anzahl von Fixierpunkten, an welchem ein Einbaukörper in dem Hohlkörper festzuschweißen ist, oder durch die Vorgabe von Mindestabständen, die jeweils paarweise zwischen den Fixierpunkten einzuhalten sind.

Die auf die Vorrichtung bezogene Aufgabe der Erfindung wird durch die Merkmale des Anspruches 11 gelöst. Danach wird eine Punktschweißanlage zur Durchführung eines Verfahrens der oben genannten Art bereitgestellt, wobei die Punktschweißanlage eine Steuerungseinheit, ein entlang eines Verfahrweges bewegbares Brennerrohr und einen mit dem Brennerrohr verbundenen Brennerkopf umfasst. Insbesondere ist somit das Brennerrohr mit dem Brennerkopf innerhalb von Hohlräumen - beispielsweise innerhalb von Rohren - bewegbar. Die oben genannten Verfahrensschritte können dabei für einen automatisierten oder teilautomatisieren Ablauf.in Form von geeigneten Steuer- oder Regelsequenzen hard- und/oder softwaremäßig in einem elektronischen Steuermodul der Steuerungseinheit implementiert sein.

Nachfolgend wird ein Ausführungsbeispiel des erfindungsgemäßen Verfahrens zur Steuerung einer Punktschweißanlage anhand von Zeichnungen näher erläutert. Darin zeigen in schematischer Darstellung:
- FIG 1: eine Punkschweißanlage mit einer Steuerungseinheit, einem Brennerrohr und einem Brennerknopf,
- FIG 2 bis 8: eine Reihe von Verfahrensschritten beim Verschweißen eines Glattrohres mit einem drahtförmigen Einbaukörper mit Hilfe der Punkschweißanlage nach FIG 1, und
- FIG 9: ein Verdampferrohr eines Dampferzeugers mit einem punktuell mit ihm verschweißten Einbaukörper in Gestalt eines helixartig gewundenen Drahtes.

In den Figuren sind einander entsprechende Teile mit denselben Bezugszeichen versehen.

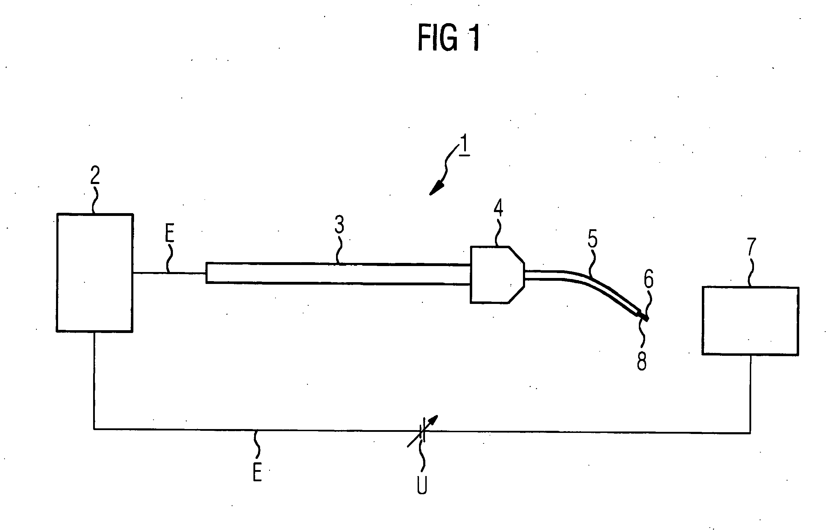

FIG 1 zeigt in schematischer Darstellung eine Punktschweißanlage 1 mit einer Steuerungseinheit 2, einem Brennerrohr 3, und einem Brennerkopf 4. Mit dem Brennerkopf 4 verbunden ist eine Schweißlanze 5 mit einem Schweißdraht 6. Mit dem Schweißdraht 6 können Punktschweißprozesse an einem metallischen Hohlkörper 7, insbesondere in Gestalt eines als Glattrohr 9 ausgeführten Verdampferrohres eines im Kraftwerksbereich eingesetzten Dampferzeugers, durchgeführt werden. Zugleich fungiert der Schweißdraht 6 als ein Kontaktelement 8, welches mit dem Hohlkörper 7 die beiden Verbindungspunkte eines im kontaktlosen Zustand unterbrochenen elektrischen Stromkreises E bildet, der über die Steuerungseinheit 2 geführt ist. Durch Anlegen einer elektrischen Spannung U in dem Stromkreis E wird ein mechanischer Kontakt zwischen dem Hohlkörper 7 und dem Kontaktelement 8 über einen elektrisches Kurzschlusssignal in der Steuerungseinheit 2 erfasst.

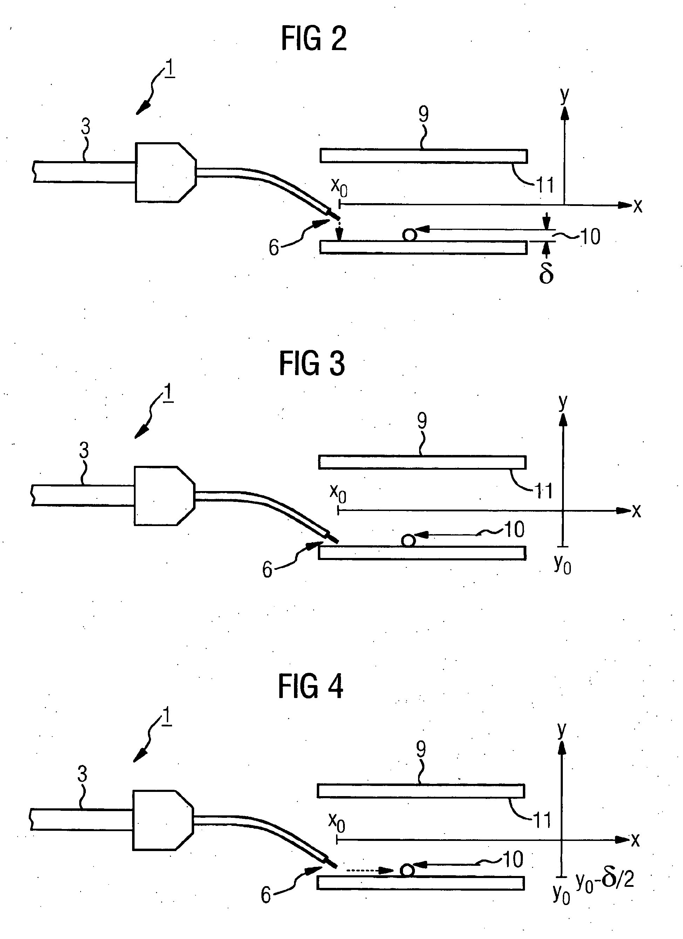

FIG 2 bis 8 zeigen in schematischer Darstellung die Punktschweißanlage 1 nach FIG 1 mit einem Glattrohr 9 und mit einem drahtförmigen Einbaukörper 10, der punktuell mit dem Glattrohr 9 verschweißt werden soll, beim Ablauf des Verfahrens. Weiterhin dargestellt ist die zentrale Längsachse X des Glattrohres 9, sowie eine in der Ansichtsebene zur Längsachse X orthogonale Querachse Y. Der drahtförmige Einbaukörper 10 hat den Drahtdurchmesser δ.

Abweichend von der hier gewählten Darstellung kann der Brennerkopf 4 mit der Schweißlanze 5 bei entsprechender Dimensionierung vollständig innerhalb des Glattrohres 9 angeordnet sein. Des Weiteren können Mittel zum Zuführen eines Schutzgases an die durch die Endregion oder Spitze des Schweißdrahtes 6 festgelegte Schweißstelle vorgesehen sein, die hier nicht näher dargestellt sind. Beim Schutzgasschweißen wird üblicherweise der abschmelzende Schweißdraht 6 von einem Motor mit veränderbarer Geschwindigkeit kontinuierlich nachgeführt, was hier zur Vereinfachung der Zeichnungen ebenfalls nicht näher dargestellt ist. Wenn im Folgenden die Rede davon ist, durch Ein- oder Ausfahren des Schweißdrahtes 6 mit Hilfe eines entsprechenden Motors, insbesondere des beim normalen Schweißbetrieb zur Nachführung vorgesehenen Motors, die Position der Schweißdrahtes 6 (genauer: seiner Spitze) in Richtung der Längsachse X und/oder in Richtung der Querachse Y zu verändern, so könnte dies alternativ oder zusätzlich auch durch Verschiebung des Brennerrohres 3 mittels eines entsprechenden Antriebs erfolgen.

In FIG 2 ist ein erster Ablaufschritt des Verfahrens dargestellt. Das Brennerrohr 3 wird zunächst parallel zur zentralen Längsachse X ausgerichtet, so dass der Schweißdraht 6 endseitig innerhalb des Glattrohres 9 angeordnet ist und bezüglich der Längssachse X die Testkoordinate X₀ einnimmt. Im Zuge des Verfahrensschrittes wird der Schweißdraht 6 bzw. das Brennerrohr 3 mit dem Schweißdraht 6 in einer Richtung parallel (oder antiparallel) zur Querachse Y verschoben, bis der Schweißdraht 6 die Innenwand 11 des Glattrohres 9 berührt. Die gestrichelte Linie gibt die endseitige Bewegungsrichtung des Schweißdrahtes 6 an.

In FIG 3 ist ein zweiter Ablaufschritt des Verfahrens dargestellt, der auf den in FIG 2 dargestellten Ablaufschritt folgt. Der Kontaktschluss zwischen dem Schweißdraht 6 und der Innenwand 11 des Glattrohres 9 wird in der Steuereinheit 2 über ein Kurzschluss-Signal erfasst (vergleiche FIG 1). Die Querachsenkoordinate Y₀, für die die Innenwand erreicht ist, wird abgespeichert und zur weiteren Verwendung vorgehalten. Anschließend wird der Schweißdraht 6 bzw. das Brennerrohr 3 mit dem Schweißdraht 6 in Richtung der Querachse Y, d. h. zu der der Schweißseite gegenüber liegenden Rohrseite hin, zurückgefahren, so dass der Kontaktschluss zwischen dem Schweißdraht 6 und der Innenwand 11 des Glattrohres 9 unterbrochen ist.

In FIG 4 ist ein dritter Ablaufschritt des Verfahrens dargestellt, der auf den in FIG 3 dargestellten Ablaufschritt folgt. Die Bewegung des Schweißdrahts 6 bzw. des Brennerrohres 3 mit dem Schweißdraht 6 in Richtung der Querachse Y wird gestoppt, sobald der Schweißdraht 6 endseitig um etwa den halben Drahtdurchmesser δ/2 von der Innenwand 11 des Glattrohres 9 entfernt ist, der somit die neue Querachsenkoordinate Y₀ - δ/2 einnimmt. Hierfür ist der Drahtdurchmesser δ als Parameter vorhanden. Anschließend wird der Schweißdraht 6 bzw. das Brennerrohr 3 mit dem Schweißdraht 6 parallel zur Längsachse X verfahren. Die Verfahrbewegung stoppt, sobald erneut ein Kontaktschluss, diesmal zwischen der Spitze des Schweißdrahtes 6 und dem elektrisch leitenden, bereits in der gewünschten Einbaulage an der Innenwand 11 des Glattrohres 9 anliegenden Einbaukörper, gebildet ist. Die gestrichelte Linie gibt die endseitige Bewegungsrichtung des Schweißdrahtes 6 an.

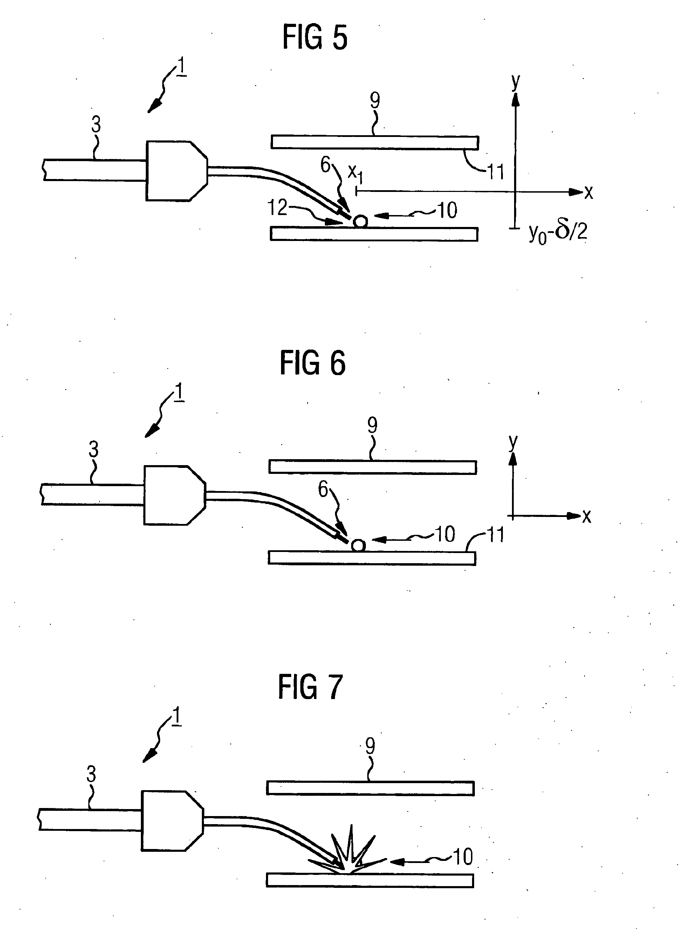

In FIG 5 ist ein vierter Ablaufschritt des Verfahrens dargestellt, der auf den in FIG 4 dargestellten Ablaufschritt folgt. In der Steuereinheit 2 wird ein Kurzschluss-Signal erfasst (vergleiche FIG 1), welches eindeutig einem Kontaktschluss zwischen dem Schweißdraht 6 und dem drahtförmigen Einbaukörper 10 zugeordnet ist, da auf Grund der im Zuge der letzten Bewegung des Schweißdrahtes 6 konstant gehaltenen Querachsenkoordinate Y₀ - δ/2 des Schweißdrahtes 6 ein Kontaktschluss zwischen dem Schweißdraht 6 und der Innenwand 11 des Glattrohres 9 ausgeschlossen ist. Die neue Längsachsenkoordinate X₁, bei der der drahtförmige Einbaukörper 10 erreicht ist, wird abgespeichert und zur späteren Verwendung vorgehalten. Anschließend wird der Schweißdraht 6 bzw. das Brennerrohr 3 mit dem Schweißdraht 6 um einen vorab anhand der Querschnittsgeometrie des Einbauköpers bestimmbaren Betrag parallel zur Querachse Y und parallel zur Längsachse X verschoben, so dass der Schweißdraht 6 endseitig in der Kehle oder Lücke 12 zwischen dem drahtförmigen Einbaukörper 10 und der Innenwand 11 des Glattrohres 9 zu liegen kommt.

In FIG 6 ist ein fünfter Ablaufschritt des Verfahrens dargestellt, der auf den in FIG 5 dargestellten Ablaufschritt folgt. Der Schweißdraht 6 ist endseitig in einer günstigen Position für eine punktuelle Verschweißung des drahtförmigen Einbaukörpers 10 an die Innenwand 11 des Glattrohres 9.

In FIG 7 ist ein sechster Ablaufschritt des Verfahrens dargestellt, der auf den in FIG 6 dargestellten Ablaufschritt folgt. Die zur Kontaktermittlung vorgesehene elektrische Messspannung U (vergleiche FIG 1) wird abgeschaltet, der Punktschweißvorgang wird durchgeführt.

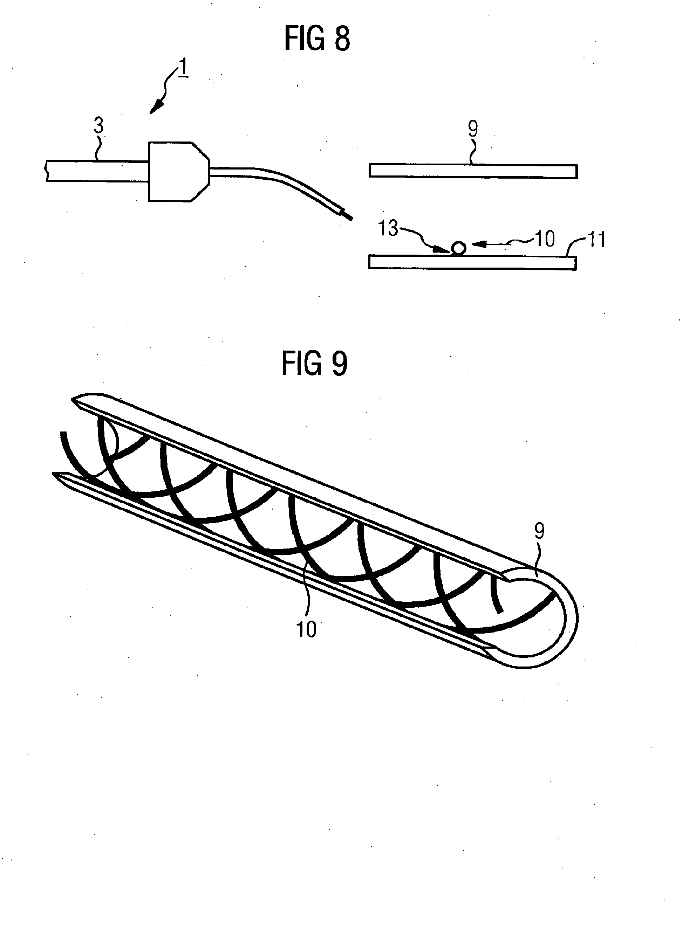

In FIG 8 ist ein siebenter Ablaufschritt des Verfahrens dargestellt, der auf den in FIG 7 dargestellten Ablaufschritt folgt. Der Punktschweißvorgang ist abgeschlossen, der drahtförmige Einbaukörper 10 ist an dem Fixierpunkt 13 mit der Innenwand 11 des Glattrohres 9 fest verbunden. Die Punktschweißanlage 1 wird in eine neutrale Position zurückgefahren oder in eine neue Ausgangsposition gebracht, um einen weiteren Schweißpunkt, etwa für einen weiteren Einbaukörper oder an anderer Stelle für denselben, vorzugsweise helixförmig gewundenen Einbaukörper, zu setzen.

Das Resultat der beschriebenen Vorgänge ist beispielhaft in FIG 9 dargestellt. Dargestellt ist nämlich ein als Glattrohr ausgeführtes Verdampferrohr 9 eines Dampferzeugers mit einem punktuell an einer Mehrzahl von Fixierpunkten mit ihm verschweißten Einbaukörper 10 in Gestalt einer Drahtanordnung in Doppelhelix-Konfiguration.

## Patentansprüche

1. Verfahren zur Steuerung einer Punktschweißanlage (1) zur Fixierung eines Einbaukörpers (10) in einem Hohlkörper (7, 9), wobei
- die Position des Einbaukörpers (10) in dem Hohlkörper (7, 9) ermittelt wird,
- aus der Position des Einbaukörpers (10) in dem Hohlkörper (7, 9) die Position eines Fixierpunktes (13) ermittelt wird,
- an dem Fixierpunkt (13) eine punktuelle Verschweißung durchgeführt wird, und **dadurch gekennzeichnet dass**
- die Position des Einbaukörpers (10) in dem Hohlkörper (7, 9) mittels eines Kontaktschlusses zwischen einem Kontaktelement (6, 8) der Punktschweißanlage (1) und dem Einbaukörper (10) ermittelt wird,
- als Kontaktelement (6, 8) ein Schweißdraht (6) verwendet wird, und
- der Kontaktschluss durch Bildung eines elektrischen Kontaktschlusses detektiert wird, und
- an dem Schweißdraht (6) eine Messspannung (U) angelegt wird, die bei der Bildung eines elektrischen Kontaktes kurzgeschlossen ist.

2. Verfahren nach Anspruch 1, wobei die Positionen einer Anzahl von Innenflächenpunkten ([X₀, Y₀]) des Hohlkörpers (7, 9) relativ zu der Lage des Hohlkörpers (7, 9) mittels eines Kontaktschlusses zwischen einem Kontaktelement (6, 8) der Punktschweißanlage (1) und der Innenfläche (11) des Hohlkörpers (7, 9) ermittelt werden.

3. verfahren nach Anspruch 2, wobei zur Bildung eines Kontaktschlusses zwischen dem Kontaktelement (6, 8) und der Innenfläche (11) des Hohlkörpers (7, 9) die Position des Kontastelementes (6, 8) relativ zu der Lage des Hohlkörpers (7, 9) variiert wird.

4. Verfahren nach Anspruch 2 und 3, wobei das Kontaktelement (6, 8) zur Herstellung eines Kontaktschlusses mit dem Einbaukörper (10) derart geführt wird, dass es einen vorgegebenen Mindestabstand zur Innenfläche (11) des Hohlkörpers (7, 9) einhält.

5. Verfahren nach Anspruch 4, wobei die Position des Kontäktelementes (6, 8) zur Ausbildung eines Kontaktschlusses mit dem Einbaukörper (10) variiert wird.

6. Verfahren nach Anspruch 5, wobei aus einem Kontaktschluss zwischen dem Kontaktelement (6, 8) und dem Einbaukörper (10) und der Position des Kontaktelementes (6, 8) relativ zu der Lage des Hohlkörpers (7, 9) die Position des Einbaukörpers (10) in dem Hohlkörper (7, 9) ermittelt wird.

7. Verfahren nach einem der Ansprüche 1 bis 6, wobei in Abhängigkeit von der Position und der Querschnittsgeometrie des Einbaukörpers (10) in dem Hohlkörper (7, 9) die Position eines Fixierpunktes (13) auf der Innenfläche (11) des Hohlkörpers (7, 9) ermittelt wird.

8. Verfahren nach Anspruch 7, wobei der Schweißdraht (6) mit einem definierten Abstand zur Innenfläche (11) des Hohlkörpers (7, 9) an die Position des Fixierpunktes (13) geführt wird.

9. verfahren nach einem der Ansprüche 1 bis 8, wobei der Hohlkörper (7, 9) ein Dampferzeugerrohr, insbesondere mit glatter Innenwand (11), ist.

10. Verfahren nach Ansprüche 9, wobei der Einbaukörper (7, 9) ein helixförmig gewundener Draht ist.

11. Punktschweißanlage (1), mit
- einem entlang eines Verfahrweges (X, Y) bewegbaren Brennerrohr (3),
- einem mit dem Brennerrohr (3) verbundenen Brennerkopf (4), und **gekennzeichnet durch**
- ein Schweißdraht (6), das als Kontaktelement dient, und **durch**
- einer steuerungseinheit (2), die zur Durchführung des Verfahrens nach einem der Ansprüche 1 bis 10 ausgelegt ist, wobei diese Steuerungseinheit folgende Schritte durchführt:
- die Position des Einbaukörpers (10) in dem Hohlkörper (7, 9) ermittelt wird,
- aus der Position des Einbaukörper (10) in dem Hohlkörper (7, 9) die Position eines Fixierpunktes (13) ermittelt wird,
- an dem Fixierpunkt (13) eine punktuelle Verschweißung durchgeführt wird, und
- die Position des Einbaukörpers (10) in dem Hohlkörper (7, 9) mittels eines Kontaktschlusses zwischen einem Kontaktelement (6, 8) der Punktschweißanlage (1) und dem Einbaukörper (10) ermittelt wird,
- der Kontaktschluss **durch** Bildung eines elektrischen Kontaktschlusses detektiert wird, und
- an dem Schweißdraht (6) eine Messspannung (U) angelegt wird, die bei der Bildung eines elektrischen Kontaktes kurzgeschlossen ist.

## Claims

1. Method for controlling a spot welding system (1) for attaching an inserted element (10) in a hollow member (7, 9), wherein
- the position of the inserted element (10) in the hollow member (7, 9) is determined,
- the position of an attachment point (13) is determined from the position of the inserted element (10) in the hollow member (7, 9),
- spot welding is performed at the attachment point (13), and **characterised in that**
- the position of the inserted element (10) in the hollow member (7, 9) is determined by means of a contact between a contact element (6, 8) of the spot welding system (1) and the inserted element (10),
- a welding wire (6) is used as the contact element (6, 8), and
- the contact is detected by forming an electric contact, and
- a measuring voltage (U) is applied at the welding wire (6) and is short-circuited when an electric contact is formed.

2. Method according to claim 1, wherein the positions of a number of inner surface points ([X₀, Y₀]) of the hollow member (7, 9) relative to the location of the hollow member (7, 9) are determined by means of a contact between a contact element (6, 8) of the spot welding system (1) and the inner surface (11) of the hollow member (7, 9).

3. Method according to claim 2, wherein the position of the contact element (6, 8) relative to the location of the hollow member (7, 9) is varied to form a contact between the contact element (6, 8) and the inner surface (11) of the hollow member (7, 9).

4. Method according to claim 2 and 3, wherein to establish a contact with the inserted element (10), the contact element (6, 8) is passed in such a manner that it maintains a predetermined minimum distance from the inner surface (11) of the hollow member (7, 9).

5. Method according to claim 4, wherein the position of the contact element (6, 8) is varied to form a contact with the inserted element (10).

6. Method according to claim 5, wherein the position of the inserted element (10) in the hollow member (7, 9) is determined from a contact between the contact element (6, 8) and the inserted element (10) and the position of the contact element (6, 8) relative to the location of the hollow member (7, 9).

7. Method according to one of claims 1 to 6, wherein the position of an attachment point (13) on the inner surface (11) of the hollow member (7, 9) is determined as a function of the position and the cross-sectional geometry of the inserted element (10) in the hollow member (7, 9).

8. Method according to claim 7, wherein the welding wire (6) is passed at a defined distance from the inner surface (11) of the hollow member (7, 9) to the position of the attachment point (13).

9. Method according to one of claims 1 to 8, wherein the hollow member (7, 9) is a steam generator tube, in particular with a smooth inner wall (11).

10. Method according to claim 9, wherein the inserted element (7, 9) is a helically wound wire.

11. Spot welding system (1) with
- a burner tube (3) that can be moved along a travel path (X, Y),
- a burner head (4) connected to the burner tube (3), and **characterised by** a welding wire (6) acting as contact element, and by
- a control unit (2), which is designed to carry out the method as claimed in one of claims 1 to 10, wherein said control unit performs the following steps:
- the position of the inserted element (10) in the hollow member (7, 9) is determined,
- the position of an attachment point (13) is determined from the position of the inserted element (10) in the hollow member (7, 9),
- spot welding is performed at the attachment point (13), and
- the position of the inserted element (10) in the hollow member (7, 9) is determined by means of a contact between a contact element (6, 8) of the spot welding system (1) and the inserted element (10),
- the contact is detected by forming an electric contact, and
- a measuring voltage (U) is applied at the welding wire (6) and is short-circuited when an electric contact is formed.

## Revendications

1. Procédé de commande d'un dispositif (1) de soudage par points pour l'immobilisation d'une pièce (10) à insérer dans une pièce (7, 9) creuse, dans lequel
- on détermine la position de la pièce (10) à insérer dans la pièce (7, 9) creuse,
- à partir de la position de la pièce (10) à insérer dans la pièce (7, 9) creuse, on détermine la position d'un point (13) d'immobilisation,
- on effectue, sur le point (13) d'immobilisation, une soudure ponctuelle, et **caractérisé en ce que**
- on détermine la position de la pièce (10) à insérer dans la pièce (7, 9) creuse au moyen d'une jonction de contact entre un élément (6, 8) de contact du dispositif (1) de soudage par points et la pièce (1) à insérer,
- on utilise un fil (6) de soudure comme élément (6, 8) de contact, et
- on détecte la jonction de contact en formant une jonction de contact électrique, et
- on applique au fil (6) de soudure une tension (U) de mesure, qui est court-circuitée lors de la formation d'un contact électrique.

2. Procédé suivant la revendication 1, dans lequel on détermine les positions d'un certain nombre de points ([X₀, Y₀]) de surface intérieure de la pièce (7, 9) creuse par rapport à la position de la pièce (7, 9) creuse au moyen d'une jonction de contact entre un élément (6, 8) de contact du dispositif (1) de soudage par points et la surface (11) intérieure de la pièce (7, 9) creuse.

3. Procédé suivant la revendication 2, dans lequel, pour former une jonction de contact entre l'élément (6, 8) de contact et la surface (11) intérieure de la pièce (7, 9) creuse, on fait varier la position de l'élément (6, 8) de contact par rapport à la position de la pièce (7, 9) creuse.

4. Procédé suivant les revendications 2 et 3, dans lequel on guide l'élément (6, 8) de contact, pour ménager une jonction de contact avec la pièce (10) à insérer, de manière à ce qu'il maintienne une distance minimum donnée à l'avance à la surface (11) intérieure de la pièce (7, 9) creuse.

5. Procédé suivant la revendication 4, dans lequel on fait varier la position de l'élément (6, 8) de contact pour la formation d'une jonction de contact avec la pièce (10) à insérer.

6. Procédé suivant la revendication 5, dans lequel on détermine la position de la pièce (10) à insérer dans la pièce (7, 9) creuse à partir d'une jonction de contact entre l'élément (6, 8) de contact et la pièce (10) à insérer et de la position de l'élément (6, 8) de contact par rapport à la position de la pièce (7, 9) creuse.

7. Procédé suivant l'une des revendications 1 à 6, dans lequel on détermine la position d'un point (13) d'immobilisation sur la surface (11) intérieure de la pièce (7, 9) creuse en fonction de la position et de la géométrie de la section transversale de la pièce (10) à insérer dans la pièce (7, 9) creuse.

8. Procédé suivant la revendication 7, dans lequel on fait passer, sur la position du point (13) de fixation, le fil (6) de soudure à une distance définie de la surface (11) intérieure de la pièce (7, 9) creuse.

9. Procédé suivant l'une des revendications 1 à 8, dans lequel la pièce (7, 9) creuse est un tube de générateur de vapeur ayant notamment une paroi (11) intérieure lisse.

10. Procédé suivant la revendication 9, dans lequel la pièce (7, 9) à incorporer est un fil enroulé en hélice.

11. Dispositif (1) de soudure par point, comprenant
- un tube (3) de brûleur pouvant être déplacé le long d'une voie (X, Y) de déplacement,
- une tête (4) de brûleur reliée au tube (3) de brûleur, et **caractérisé par**
- un fil (6) de soudure, qui sert d'élément de contact, et par
- une unité (2) de commande, qui est conçue pour effectuer le procédé suivant l'une des revendications 1 à 10, cette unité de commande effectuant les stades suivants :
- on détermine la position de la pièce (10) à insérer dans la pièce (7, 9) creuse,
- à partir de la position de la pièce (10) à insérer dans la pièce (7, 9) creuse, on détermine la position d'un point (13) d'immobilisation,
- on effectue, sur le point (13) d'immobilisation, une soudure ponctuelle, et
- on détermine la position de la pièce (10) à insérer dans la pièce (7, 9) creuse au moyen d'une jonction de contact entre un élément (6, 8) de contact du dispositif (1) de soudage par points et la pièce (1) à insérer,
- on détecte la jonction de contact en formant une jonction de contact électrique, et
- on applique au fil (6) de soudure une tension (U) de mesure, qui est court-circuitée lors de la formation d'un contact électrique.
